# EUROPÄISCHE PATENTSCHRIFT

(11) **EP 2 101 080 B1**
(45) Veröffentlichungstag und Bekanntmachung des Hinweises auf die Patenterteilung: **15.06.2011**
(21) Anmeldenummer: 09002584.2
(22) Anmeldetag: 24.02.2009
(51) Int. Cl.: F16G 3/16

(54) **Verfahren und danach arbeitende Einpressvorrichtung**
Method and press fitting device functioning accordingly
Procédé et dispositif de pressage fonctionnant selon celui-ci

(30) Priorität: 12.03.2008 DE 102008013853
(43) Veröffentlichungstag der Anmeldung: 16.09.2009
(73) Patentinhaber: Walter Sülzle GmbH, 72348 Rosenfeld (DE)
(72) Erfinder: Sülzle, Walther, 72348 Rosenfeld (DE)
(74) Vertreter: Säger, Manfred

(56) Entgegenhaltungen:
- EP-A- 0 760 439
- WO-A-2007/025567
- BE-A- 442 979
- DE-B- 1 094 052
- DE-C- 757 427
- US-A1- 2003 150 698

## Beschreibung

Die Erfindung betrifft ein gattungsgemässes Verfahren nach dem Oberbegriff des Hauptanspruchs, nämlich ein Verfahren zum Einpressen der V-förmig geöffneten und über eine Öse verbundenen, ungleich langen und entweder an einem streifenförmigen Trägermaterial in entsprechenden Ausnehmungen gefassten oder mittels eines Querdrahtes verbundenen Schenkel einer Reihe einzelner, einen Drahthakenverbinder bildender Drahthaken -nachfolgend auch Drahthakenverbinder genannt- in das Ende eines Gurtes unter Wärmezufuhr in einer Heisspressstation, wobei die am Ende jedes Schenkels spitzwinklig abstehenden Hakenspitzen beim Zubiegen in den Gurt eindringen und die Schenkel eine U-förmige Einpresslage aufweisen und wobei der Gurt zusammen mit dem beim Einpressen festgelegten Drahthakenverbinder anschliessend in eine Kaltpressstation verbracht und dort kalt nachsowie fertiggepresst wird, und eine Einpressvorrichtung nach dem Oberbegriff des nebengeordneten Vorrichtungsanspruchs.

Ein solches gattungsgemässes Verfahren (DE-36 42 803-A) und eine solche gattungsgemässe Einpressvorrichtung sind bekannt (DE 757 427) und haben sich bewährt. Hierbei sind vor dem Einpressen der Drahthaken die Enden des Gurtes in einen Kleber getaucht worden, so dass in praxi das aus Papier bestehende streifenförmige Trägermaterial fest auf dem Ende des Gurtes verbleibt. Allerdings hat sich die Qualität dieser Verbindung zwischen dem Papier und dem Ende des Gurtes nicht immer bewährt. Als Gurt kommt auch ein beliebiges Flachmaterial in Betracht (z.B. wie in W02007/025567 A1).

Neben den in den Ausnehmungen des streifenförmigen Trägermaterials gefassten Drahthaken eines Drahthakenverbinders (DE-36 48 03 A1; WO2007/ 025567 A1) kommen auch solche in Betracht, bei denen stattdessen die Schenkel einer Reihe einzelner Drahthaken mittels eines Querdrahtes verbundenen sind (EP-1 338 825-A1).

Der Erfindung liegt die Aufgabe zugrunde, ein gattungsgemässes Verfahren sowie eine gattungsgemässe Einpressvorrichtung einfacher auszugestalten.

Diese Aufgabe wird bei einem gattungsgemässen Verfahren sowie einer gattungsgemässen Einpressvorrichtung nach den Oberbegriffen der jeweiligen nebengeordneten Ansprüche erfindungsgemäss durch deren kennzeichnende Merkmale gelöst.

Mit dem erfindungsgemässen Verfahren wird das kalte Nachpressen in einfacher Weise möglich, ohne dass es notwendig ist, den Gurt über seine ganze Länge in seiner Längsrichtung, also so lang wie der Gurt breit ist, aus der Heisspressstaion herauszubewegen. Statt dessen wird der Gurt quer zu seiner Erstreckung in eine in unmittelbarer Nähe dazu, bsw. einige Zentimeter davon entfernt, unabhängig von der Länge des Gurtes in die Kaltpressstation zum kalten Nachsowie Fertiggepressen verbracht. Daher muss auch bei der nach einem der Verfahrensansprüche arbeitenden Einpressvorrichtung nicht eine in Richtung der Pressbacken beabstandet dazu angeordneten zweiten Arbeitsstation vorgesehen werden; vielmehr genügt das Verbringen des Endes des Gurtes in die neben oder in einem der beiden Heisspressbacken, also wenige Zentimeter entfernt angeordnete Kaltpressstation.

Mit Vorteil wird also bei Anwendung des erfindungsgemässen Verfahrens und der erfindungsgemässen Einpressvorrichtung, nicht nur eine einfach herzustellende Arbeitsstation vorgesehen, sondern auch der Zeitaufwand und der Aufwand zum Transport des Gurtes beträchtlich verringert.

Zweckmässigerweise wird das Ende des Gurtes in dem weiteren Schritt quer sowie parallel zu seiner Erstreckung, also auch parallel zu sich selbst in die Kaltpressstation verbracht und dort mit -während einer bestimmten Nachpresszeit- kalt nach- sowie damit fertiggepresst.

In weiterer vorteilhafter Vereinfachung des erfindungsgemässen Verfahrens kann das Ende des Gurtes, zusammen mit dem zuvor aufgebrachten Trägermaterials in die Kaltpressstation verbracht und dort kalt nachgepresst weirden.

In einfachster Ausgestaltung weist die Kaltpressstation dabei ein Paar von Nachpressbacken auf, die am besten parallel zu den Heisspressbacken angeordnet sind.

In einer ersten, besonders einfachen Ausführungsform können die Nachpressbacken als Teil eines der beiden Heisspressbacken ausgebildet sein.

Weitere zweckmässige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: einen Drahthakenverbinder, in perspekiv- ischer Darstellung;
- Figur 2: das gestanzte Trägermaterial gemäss Fig. 1, in Draufsicht;
- Figur 3: einen einzelnen Drahthaken gemäss Fig. 1, in Seitenansicht;
- Figur 4: zwei an den Enden von Gurten montierte Drahthakenverbinder, in Draufsicht und
- Figur 5: die an den Gurten montierten Drahthaken- verbinder nach Figur 4, im Schnitt V-V.
- Figur 6: eine Einpressvorrichtung für die Draht- hakenverbinder, in einer ersten Arbeits- stellung und schematischer Ansicht und

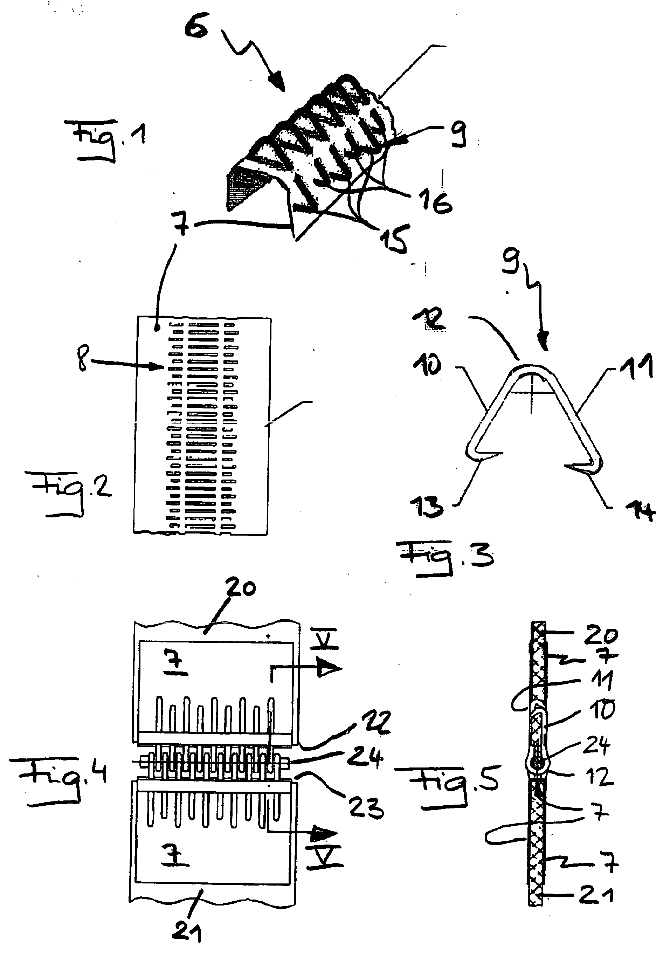

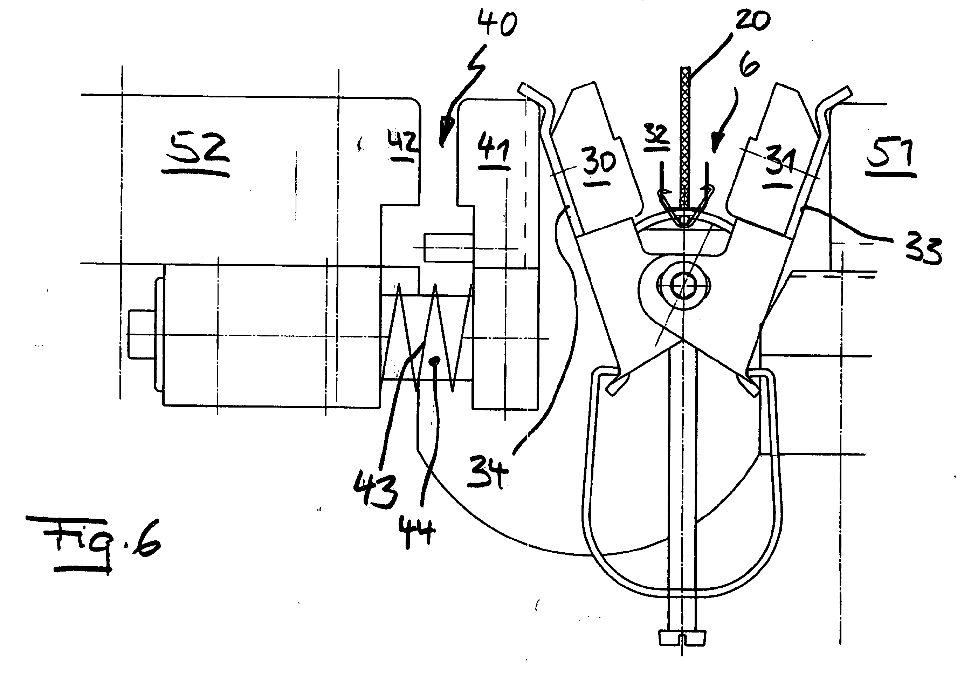

- Figur 6: dee Einpressvorrichtung nach Figur 5 in Drahthakenverbinder in einer zweiten Arbeitsstellung.

Der in Figur 1 gezeigte, insgesamt mit 6 bezeichnete Drahthakenverbinder weist ein in etwa U-förmig geformtes und nach unten offenes, streifenförmiges Trägermaterial 7 aus einem Textilgewebe, vorzugsweise einem Gewebeklebeband auf, das -wie in Figur 2 dargestellt- mit einer Vielzahl von im Abstand sowie parallel zueinander angeordneter Ausstanzungen 8 ausgebildeten Ausnehmungen für einzelne Drahthaken 9 versehen ist.

Jeder V-förmig vorgebogene einzelne Drahthaken 9 aus vorzugsweise rundem Stahldraht weist dabei zwei ungleich lange, in einem Winkel winklig zueinander verlaufende Schenkel 10, 11 beiderseits des dabei von einer Öse 12 gebildeten Knickbereichs mit an deren Enden aufeinanderzu abgebogenen Hakenspitzen 13, 14 auf (Fig. 3).

Diese einzelnen Drahthaken 9 werden mit in die Vielzahl von Ausstanzungen 8 ebene Trägermaterial 7 eingesetzt. Bei dessen Falten zu der in Figur 1 gezeigten, nach unten offenen U-form werden die Drahthaken in den Ausstanzungen 8 unter Bildung des Drahthakenverbinders 6 fixiert. Die Grösse, Breite und der Abstand der Ausstanzungen 8 voneinander ist von der Grösse der Drahthaken 9 abhängig.

In dem Trägermaterial 7 ist dann eine Reihe 15 von einzelnen, nicht miteinander verbundenen, paarweise mit Abstand und parallel zueinander angeordneten Drahthaken 9 gefasst. Mittig zwischen einem zueinander benachbarten Paar von zueinander parallel angeordneten Drahthaken 9 ist jeweils ein bezüglich der durch deren Winkelhalbierenden gebildeten Ebene gespiegelt angeordneter Drahthaken angeordnet, die alle miteinander ebenfalls eine Reihe 16 von nicht miteinander verbundenen, paarweise mit Abstand und parallel zueinander angeordneten Drahthaken 9 bilden, so dass einem kurzen Schenkel der einen Reihe 15 zwei lange Schenkel der anderen Reihe 16 benachbart ist.

Die Drahthakenverbinder 6 werden an den beiden einander zugewandten Enden 22, 23 zweier Gurte 20, 21 durch Einpressen unter Wärmeeinwirkung montiert, wie schematisch in Figur 4 gezeigt. Die Hakenspitzen 13, 14 kommen dabei kaum oder nicht auf der anderen Seite der Gurte heraus, sondern sind durch das Trägermaterial 7 abgedeckt; allenfalls schauen die Hakenspitzen etwas vor und befestigen das Trägermaterial von der anderen Seite her. Zusätzlich ist die Kante jedes Endes 22, 23 des Gurtes 20, 21 durch einen Teil des Trägertematerials 7 abgedeckt, wodurch dieses stabilisiert ist. Als Gurt kommt aber auch ein Band oder auch beliebiges Flachmaterial in Betracht.

In die Lücken zwischen den durch die Drahthaken 9 gebildeten Bandnaht des einen Endes 22 des Bandes 20 sind die vorspringenden Drahthaken 9 des anderen Endes 23 des anderen Bandes 21 eingesetzt, und durch die dabei gebildete durchgängige Öffnung ist unter Bildung einer gelenkigen Verbindung ein Kupplungsstab 24 hindurchgesteckt.

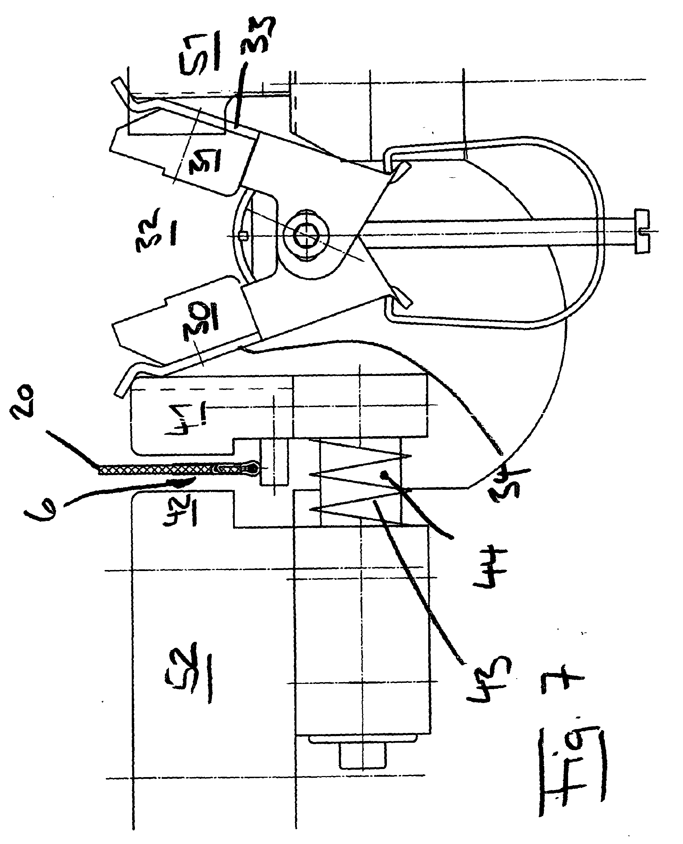

Eine Einpressvorrichtung nach Lehre der Erfindung ist in den Figuren 6 und 7, jeweils schematisch und in anderer Arbeitsstellung dargestellt. Sie weist zwei von einer Öffnungslage zur Aufnahme der V-förmig geöffneten Schenkel 10,11 der Reihe 15,16 einzelner, einen Drahthakenverbinder 6 bildender Drahthaken 9 in eine die Schenkel 10,11 in die die U-förmige Einpresslage bringende Schliesslage relativ zueinander bewegbare, beheizbare Heisspressbacken 30 und 31 als Heisspressstation 30,31 auf.

Neben oder in einem der beiden Heisspressbacken 30 und 31 ist dabei eine ein Paar von Nachpressbacken 41,42 aufweisende Kaltpressstation 40 angeordnet, welche Nachpressbacken 41,42 parallel zu den Heisspressbacken 30,31 angeordnet sind.

Die Heisspressbacken 30,31 werden auf ihrer dem Pressspalt 32 abgewandten Rückseite 33,34 von Presstempeln 51,52 zum Zwecke des Pressens mit Druck beaufschlagt, wobei sie sich relativ aufeinander zu bewegen. Dabei ist der eine (52) der beiden Presstempel 51,52 maschinenfest und der andere (51) beweglich. Der maschinenfeste Presstempel 52 weist das Paar 41 und 42 der Nachpressbacken 41,42 der Kaltpressstation 49 auf. Der eine (41) der beiden Nachpressbacken 41,42 wird mit der Kraft einer Schraubenfeder 43 von dem anderen Nachpressbacken 42 beabstandet und längs einer als Teleskopführung ausgebildeten Linearführung 44 beweglich geführt zu dem Erstgenannten gehalten.

Mit der Einperssvorrichtung lässt sich das Verfahren nach Lehre der Erfindung, nämlich zum Einpressen der V-förmig geöffneten und über eine Öse 12 verbundenen, ungleich langen und an dem streifenförmigen Trägermaterial 7 in den diesen entsprechenden Ausnehmungen 8 gefassten Schenkel 10,11 der Reihe 15,16 einzelner, den Drahthakenverbinder 6 bildender Drahthaken 9 in das Ende des Gurtes 20,21 unter Wärmezufuhr in einer Heisspressstation ausführen. Dazu wird der Drahthakenverbinder 6 in den durch die Heisspressbacken 30 und 31 als Heisspressstation 30,31 gebildeten Pressspalt 32 eingesetzt (Figur 6) und mit dem Einpressen begonnen, wozu sich die Pressstempel 51,52 aufeinander zu bewegen.

Dabei kommen zunächst unter Spannen der Feder 43, längs der Linearführung 44 geführt, die Nachpressbacken 41,42 aneinander zur Anlage. Im weiteren Verlauf der Bewegung der Pressstempel 51,52 werden die V-förmig geöffneten Schenkel 10, 11 des Drahthakenverbinders 6 von den Heisspressbacken 30,31 in deren U-förmige Einpresslage gebracht, wobei die am Ende jedes Schenkels 10,11 spitzwinklig abstehenden Hakenspitzen 13, 14 beim Zubiegen in den Gurt 20,21 unter Wärmezufuhr in der Heisspressstation eindringen. Danach werden die Heisspressbacken 30,31 unter Freigabe des Pressspaltes 32 sowie Öffnung der Nachpressbacken 41,42 wieder geöffnet.

Nach diesem erfolgten Einpressen der Drahthaken 9 wird das Ende des Gurtes 20,21 in einem weiteren Schritt aus dem Pressspalt 32 quer, vorzugsweise parallel zu seiner Erstreckung, die jener des Kupplungsstabes 24 entspricht, wenige Zentimeter in die Kaltpressstation 40 verbracht (Figur 7) und dort während einer bestimmten Nachpresszeit kalt nachsowie fertiggepresst.

## Patentansprüche

1. Verfahren zum Einpressen der V-förmig geöffneten und über eine Öse (12) verbundenen, ungleich langen und entweder an einem streifenförmigen Trägermaterial (7) in entsprechenden Ausnehmungen (8) gefassten oder mittels eines Querdrahtes verbundenen Schenkel (10,11) einer Reihe (15,16) einzelner, einen Drahthakenverbinder (6) bildender Drahthaken (9) in das Ende eines Gurtes (20,21) unter Wärmezufuhr in einer beheizbare Heisspressbacken (30,31) aufweisenden Heisspressstation, wobei die am Ende jedes Schenkels (10,11) spitzwinklig abstehenden Hakenspitzen (13,14) beim Zubiegen in den Gurt (20,21) eindringen und die Schenkel (10,11) eine U-förmige Einpresslage aufweisen und wobei der Gurt (20,21) zusammen mit dem beim Einpressen festgelegten Drahthakenverbinder (6) anschliessend in eine Nachpressbacken (41,42) aufweisende Kaltpressstation (40) verbracht und dort kalt nach- sowie fertiggepresst wird, **dadurch gekennzeichnet, dass** nach dem Einpressen der Drahthaken (9) in das Ende (22,23) des Gurtes (20,21) unter Wärmezufuhr in der Heisspressstation (31,32) das Ende des Gurtes (20,21) in einem weiteren Schritt quer zu seiner Erstreckung in die Kaltpressstation (40) verbracht und dort nach- sowie fertiggepresst wird.

2. Verfahren nach Anspruch 1, **dadurch gekennzeichnet, dass** das Ende des Gurtes in dem weiteren Schritt parallel zu seiner Erstreckung in die Kaltpressstation (40) quer dazu verbracht wird.

3. Verfahren nach Anspruch 1 oder 2, **dadurch gekennzeichnet, dass** das Ende (22,23) des Gurtes (20,21) zusammen mit dem Trägermaterial (7) in dem weiteren Schritt quer zu seiner Erstreckung in die Kaltpressstation (40) verbracht wird.

4. Verfahren nach einem der vorhergehenden Ansprüche, **dadurch gekennzeichnet, dass** die Nachpressbacken (41,42) der Kaltpressstation (40) nicht beheizt sind.

5. Einpressvorrichtung mit zwei von einer Öffnungslage zur Aufnahme der V-förmig geöffneten Schenkel (10,11) der Reihe (15,16) einen Drahthakenverbinder (6) bildender einzelner Drahthaken (9) in eine die Schenkel (10,11) in die die U-förmige Einpresslage bringende Schliesslage relativ zueinander bewegbaren beheizbare Heisspressbacken (30,31) als Heisspressstation, die neben einem der beiden Heisspressbacken (30,31) der Heisspressstation die Kaltpressstation (40) aufweist,
wobei die Kaltpressstation (40) ein Paar von Pressbacken aufweist, **dadurch gekennzeichnet, dass** diese als Nachpressbacken (41,42) ausgebildet sind,
dass entweder die Nachpressbacken (41, 42) als Teil eines der beiden Heisspressbacken (30,31) ausgebildet sind-
oder dass zumindest einer der Heisspressbacken (30,31) auf seiner dem Pressspalt (32) abgewandten Rückseite von zumindest einem Presstempel (51,52) zum Zwecke des Pressens mit Druck beaufschlagt wird und dass der eine der beiden maschinenfeste oder bewegliche Presstempel (52) das Paar der Nachpressbacken (41,42) der Kaltpressstation (40) aufweist.

6. Einpressvorrichtung nach Anspruch 5, **dadurch gekennzeichnet, dass** die Nachpressbacken (41,42) parallel zu den Heisspressbacken (30,31) angeordnet sind.

7. Einpressvorrichtung nach Anspruch 5, **dadurch gekennzeichnet, dass** der eine (41) der beiden Nachpressbacken (41,42) von dem anderen Presstempel (52) beabstandet und beweglich zu diesem geführt ist und der andere Nachpressbacken (42) von dem anderen Presstempel (52) gebildet ist.

8. Einpressvorrichtung nach Anspruch 7, **dadurch gekennzeichnet, dass** der beabstandete Nachpressbacken (42) längs einer Linearführung (44) beweglich geführt ist.

9. Einpressvorrichtung nach Anspruch 8, **dadurch gekennzeichnet, dass** der beabstandete Nachpressbacken (42) längs einer als teleskopführung ausgebildeten Linearführung (44) beweglich geführt ist.

10. Einpressvorrichtung nach Anspruch 8 oder 9, **dadurch gekennzeichnet, dass** der beabstandete Nachpressbacken (42) längs einer als teleskopführung ausgebildeten Linearführung (44) entgegen der Kraft einer Gas- oder Schraubenfeder (43) beweglich geführt ist.

11. Einpressvorrichtung nach Anspruch 5, **dadurch gekennzeichnet, dass** beide Heisspressbacken (30,31) auf ihrer dem Pressspalt (32) abgewandten Rückseite von je einem Presstempel (51,52) zum Zwecke des Pressens mit Druck beaufschlagt werden.

## Claims

1. A method for pressing the arms (10, 11), opened in a V-shape and connected via a loop (12), unequal in length and mounted either on a strip-shaped carrier material (7) in corresponding recesses (8) or connected by means of a transverse wire, of a row (15, 16) of individual wire hooks (9) forming a wire-hook connector (6) into the end of a belt (20, 21) with a supply of heat in a hot-pressing station providing heated hot-pressing jaws (30, 31),
wherein the tips of the hooks (13, 14) projecting at an acute angle at the end of each arm (10, 11) penetrate into the belt (20, 21) upon bending, and the arms (10, 11) provide a U-shaped compressed position, and wherein the belt (20, 21) together with the wire-hook connector (6), attached during the pressing, is then moved into a cold-pressing station (40) providing re-pressing jaws (41, 42) and is cold-pressed and finished there,
**characterised in that**,
after the pressing of the wire hooks (9) into the end (22, 23) of the belt (20, 21) with the supply of heat in the hot-pressing station (31, 32), the end of the belt (20, 21) is moved in a further step transversely to its extension into the cold-pressing station (40) and re-pressed and finished there.

2. The method according to claim 1,
**characterised in that**,
in the further step, the end of the belt is moved parallel to its extension into the cold-pressing station (40) transversely to the latter.

3. The method according to claim 1 or 2,
**characterised in that**,
in the further step, the end (22, 23) of the belt (20, 21) is moved together with the carrier material (7) transversely to its extension into the cold-pressing station (40).

4. The method according to any one of the preceding claims,
**characterised in that**
the re-pressing jaws (41, 42) of the cold-pressing station (40) are not heated.

5. A pressing device with two heated hot-pressing jaws (30, 31) as the hot-pressing station, movable relative to one another into a closed position, bringing the arms (10, 11) from an open position into the U-shaped compressed position, in order to accommodate the arms (10, 11), opened in a V-shape, of the row (15, 16) of individual wire hooks (9) forming a wire-hook connector, which provides the cold-pressing station (40) next to one of the two hot-pressing jaws (30, 31) of the hot-pressing station,
wherein the cold-pressing station (40) provides a pair of pressing jaws,
**characterised in that**
the latter are formed as re-pressing jaws (41, 42),
that either the re-pressing jaws (41, 42) are formed as a part of one of the two hot-pressing jaws (30, 31)
or that, for the purpose of pressing, at least one of the hot-pressing jaws (30, 31) is supplied with pressure at its rear side facing away from the pressing gap (32) by a pressing piston (51, 52), and that the one of the two pressing pistons (52), attached to the machine or movable, provides the pair of re-pressing jaws (41, 42) of the cold-pressing station (40).

6. The pressing device according to claim 5,
**characterised in that**
the re-pressing jaws (41, 42) are arranged parallel to the hot-pressing jaws (30, 31).

7. The pressing device according to claim 5,
**characterised in that**
the one (41) of the two re-pressing jaws (41, 42) is guided at a spacing distance from the other pressing piston (52) and in a movable manner relative to the latter, and the other re-pressing jaw (42) is formed by the other pressing piston (52).

8. The pressing device according to claim 7,
**characterised in that**
the re-pressing tool (42) disposed at a spacing distance is guided in a movable manner along a linear guide (44).

9. The pressing device according to claim 8,
**characterised in that** the re-pressing jaw (42) disposed at a spacing distance is guided in a movable manner along a linear guide (44) formed as a telescopic guide.

10. The pressing device according to claim 8 or 9,
**characterised in that**
the re-pressing jaw (42) disposed at a spacing distance is guided in a movable manner along a linear guide (44) formed as a telescopic guide against the force of a gas spring or helical spring (43).

11. The pressing device according to claim 5,
**characterised in that**,
for the purpose of pressing, both hot-pressing jaws (30, 31) are supplied with pressure at their rear side facing away from the pressing gap (32) in each case by a pressing piston (51, 52).

## Revendications

1. Procédé pour enfoncer les branches (10, 11), ouvertes en forme de V et reliées par une boucle (12), ayant des longueurs différentes et étant maintenues sur un matériau support (7) en forme de bande dans des évidements (8) correspondants ou étant reliées au moyen d'un fil transversal, lesquelles sont disposées selon une rangée (15, 16) de crochets en fil (9) individuels formant une attache à crochets (6), dans l'extrémité d'une courroie (20, 21) moyennant un apport de chaleur dans un poste de pressage à chaud muni de mâchoires de pressage à chaud (30, 31) propres à être chauffées, sachant que les pointes en crochet (13, 14), formant une saillie à angle aigu à l'extrémité de chaque branche (10, 11), s'enfoncent dans la courroie (20, 21) au moment de la flexion de fermeture, et les branches (10, 11) comportent une position d'enfoncement en forme de U, et sachant que la courroie (20, 21), conjointement avec l'attache à crochets (6) fixée lors de l'enfoncement, est amenée ensuite dans un poste de pressage à froid (40), muni de mâchoires de pressage postérieur (41, 42) pour y subir ensuite un pressage postérieur à froid et un pressage de finition à froid, **caractérisé en ce que**, après l'enfoncement des crochets en fil (9) dans l'extrémité (22, 23) de la courroie (20, 21) moyennant un apport de chaleur dans le poste de pressage à chaud (31, 32), l'extrémité de la courroie (20, 21) est, au cours d'une étape supplémentaire, transportée transversalement à son extension, vers le poste de pressage à froid (40) pour y subir un pressage postérieur et un pressage de finition.

2. Procédé selon la revendication 1, **caractérisé en ce que**, au cours de l'étape supplémentaire, l'extrémité de la courroie est transportée parallèlement à son extension vers le poste de pressage à froid (40) transversalement à celui-ci.

3. Procédé selon la revendication 1 ou 2, **caractérisé en ce que** l'extrémité (22, 23) de la courroie (20, 21), conjointement avec le matériau support (7), est déplacée, au cours de l'étape supplémentaire, transversalement à son extension vers le poste de pressage à froid (40).

4. Procédé selon l'une quelconque des revendications précédentes, **caractérisé en ce que** les mâchoires de pressage postérieur (41, 42) du poste de pressage à froid (40) ne sont pas chauffées.

5. Dispositif d'enfoncement, comportant deux mâchoires de pressage à chaud (30, 31) propres à être chauffées, formant le poste de pressage à chaud, lesquelles sont mobiles l'une par rapport à l'autre à partir d'une position d'ouverture, pour recevoir les branches (10, 11) ouvertes en forme de V de la rangée (15, 16) de crochets en fil (9) individuels formant une attache à crochets (6), vers une position de fermeture, dans laquelle les branches (10, 11) sont amenées dans la position d'enfoncement en forme de U, et comportant, à côté de l'une des deux mâchoires de pressage à chaud (30, 31) du poste de pressage à chaud, le poste de pressage à froid (40), sachant que le poste de pressage à froid (40) comporte une paire de mâchoires de pressage, **caractérisé en ce que** ces dernières sont réalisées sous forme de mâchoires de pressage postérieur (41, 42), **en ce que** les mâchoires de pressage postérieur (41, 42) sont réalisées en tant que partie de l'une des deux mâchoires de pressage à chaud (30, 31), ou **en ce qu'**au moins une des mâchoires de pressage à chaud (30, 31), sur sa face arrière détournée de la fente de pressage (32), est sollicitée par au moins un poinçon de pressage (51, 52) en vue d'un pressage sous pression, et **en ce que** l'un des deux poinçons de pressage (52), solidaires de la machine ou mobiles, comporte la paire de mâchoires de pressage postérieur (41, 42) du poste de pressage à froid (40).

6. Dispositif d'enfoncement selon la revendication 5, **caractérisé en ce que** les mâchoires de pressage postérieur (41, 42) sont disposées parallèlement aux mâchoires de pressage à chaud (30, 31).

7. Dispositif d'enfoncement selon la revendication 5, **caractérisé en ce que** l'une (41) des deux mâchoires de pressage postérieur (41, 42) est située à distance de l'autre poinçon de pressage (52) et est mobile par rapport à celui-ci, et l'autre mâchoire de pressage postérieur (42) est formée par l'autre poinçon de pressage (52).

8. Dispositif d'enfoncement selon la revendication 7, **caractérisé en ce que** la mâchoire de pressage postérieur (42) située à distance est montée mobile le long d'un guidage linéaire (44).

9. Dispositif d'enfoncement selon la revendication 8, **caractérisé en ce que** la mâchoire de pressage postérieur (42) située à distance est montée mobile le long d'un guidage linéaire (44) réalisé sous forme de guidage télescopique.

10. Dispositif d'enfoncement selon la revendication 8 ou 9, **caractérisé en ce que** la mâchoire de pressage postérieur (42) située à distance est montée mobile le long d'un guidage linéaire (44) réalisé sous forme de guidage télescopique, dans le sens opposé à la force d'un ressort à gaz comprimé ou ressort à boudin (43).

11. Dispositif d'enfoncement selon la revendication 5, **caractérisé en ce que** les deux mâchoires de pressage à chaud (30, 31), sur leur face arrière détournée de la fente de pressage (32), sont sollicitées chacune par un poinçon de pressage (51, 52) en vue d'un pressage sous pression.
